# EUROPEAN PATENT SPECIFICATION

(11) **EP 4 406 809 B1**
(45) Date of publication and mention of the grant of the patent: **29.04.2026**
(21) Application number: 22872183.3
(22) Date of filing: 26.09.2022
(51) Int. Cl.: B61F 5/52, B61F 5/10

(54) **FRAME, BOGIE, AND RAIL VEHICLE**
RAHMEN, DREHGESTELL UND SCHIENENFAHRZEUG
CADRE, BOGIE ET VÉHICULE FERROVIAIRE

(30) Priority: 26.09.2021 CN 202111129773
(43) Date of publication of application: 31.07.2024
(73) Proprietor: CRRC Qingdao Sifang Co., Ltd., Qingdao, Shandong 266111 (CN)
(72) Inventor: DING, Sansan, Qingdao, Shandong 266111 (CN); GAO, Yulong, Qingdao, Shandong 266111 (CN); SUN, Houli, Qingdao, Shandong 266111 (CN); WANG, Xiaoming, Qingdao, Shandong 266111 (CN); ZHANG, Xiongfei, Qingdao, Shandong 266111 (CN); CHEN, Dongfang, Qingdao, Shandong 266111 (CN); WANG, Shi, Qingdao, Shandong 266111 (CN); ZHANG, Lianhe, Qingdao, Shandong 266111 (CN); XIAO, Peng, Qingdao, Shandong 266111 (CN); ZHANG, Yi, Qingdao, Shandong 266111 (CN); RUAN, Dawei, Qingdao, Shandong 266111 (CN)
(74) Representative: Prinz & Partner mbB
(86) International application number: PCT/CN2022/121225
(87) International publication number: WO 2023/046139

(56) References cited:
- CN-A- 104 691 569
- CN-A- 112 026 819
- CN-A- 112 026 830
- CN-A- 113 753 092
- CN-A- 114 030 499
- CN-A- 114 084 184
- JP-A- 2006 015 820
- JP-A- 2007 112 304
- JP-A- 2011 255 754
- JP-A- 2012 176 653

## Description

The present application claims the priority to Chinese Patent Application No. 202111129773.6, titled "FRAME, BOGIE, AND RAIL VEHICLE", filed with the China National Intellectual Property Administration on Sept. 26, 2021.

### FIELD

The present application relates to the technical field of rail vehicle, and in particular to a frame, a bogie, and a rail vehicle.

### BACKGROUND

In the existing rail vehicles such as a metro, an electric multiple unit, a high-speed rail or the like, side sills and cross beams of a bogie frame are all basically made of metal materials. As a part of the cross beams of the bogie, an auxiliary beam of the bogie is welded between two cross beams. An air spring is provided in a middle portion of the side sill of the bogie, and an inner cavity of the side sill forms an additional air chamber of the air spring. When the volume is insufficient, an external bellow acts as the additional air chamber as well, and thus the structure is complicated.

In view of this, a technical problem to be solved by those skilled in the art is to improve the design of the bogie frame.

CN 104 691 569 A discloses a steering frame and a framework thereof. The framework includes transverse beams, side beams, air-spring mounting bases, longitudinal beams and air-spring supporting beams arranged on the outer side of the side beams. The air-spring mounting bases are arranged on the air-spring supporting beams; the transverse beams are steel pipes; each air-spring supporting beam is provided with an inner cavity communicated with an inner channel of the corresponding transverse beam; and an additional air chamber of an air spring is formed by the inner cavity of each air-spring supporting beam and the inner channel of the corresponding transverse beam.

### SUMMARY

A frame provided in the present application includes two side sills and two cross beams connected between the two side sills, and air springs of the bogie is mounted at the side sills; at least one auxiliary beam is connected between the two cross beams, and an inner cavity of the auxiliary beam is divided into a first cavity and a second cavity; the first cavity is in communication with an inner cavity of one of the two cross beams, to together serve as an additional air chamber for one of the air springs; and the second cavity is in communication with an inner cavity of the other of the two cross beams, to together serve as another additional air chamber for another one of the air springs; the at least one auxiliary beam is provided with a first differential pressure valve port and a second differential pressure valve port each being in communication with an interior and an exterior of the at least one auxiliary beam, and the first differential pressure valve port and the second differential pressure valve port are in communication with the first cavity and the second cavity respectively; the first cavity and the second cavity are in communication with a differential pressure valve through the first differential pressure valve port and the second differential pressure valve port, respectively; where an inner wall of the first cavity and an inner wall of the second cavity are each provided with a lining serving as a core mold, a connection seat is further provided, where the connection seat includes a sealing box, and a portion of a peripheral wall of the sealing box is fixed to an inner wall of the lining in a sealed manner; each of the two cross beams includes a beam main body made of a fiber composite material, and a reinforcing rib also made of the fiber composite material and integrally formed inside an inner cavity of the beam main body, and the at least one auxiliary beam made of a composite material is connected to the two cross beams by fasteners.

In an embodiment, the side sills are each of a one-piece box-shaped structure, and the side sills are made of a fiber composite material or a lightweight metal material.

In an embodiment, each of the side sills includes a main beam body of a box shape and end portion beam bodies located at two ends of the main beam body respectively, the end portion beam bodies and the main beam body are provided in an integral or separate manner, and the end portion beam bodies are each of a plate-like structure.

In an embodiment, the main beam body and the end portion beam bodies are provided in an integral manner, and the main beam body and the end portion beam bodies are all made of the fiber composite material; or
the main beam body and the end portion beam bodies are provided in an integral manner, the end portion beam bodies are made of the fiber composite material, and the main beam body includes a core mold matching the main beam body, and a fiber composite material layer wound around an outer periphery of the core mold; or
the main beam body and the end beam body are provided in a separate manner, the main beam body is made of the fiber composite material, and the end beam body is made of metal.

In an embodiment, the main beam body and the end portion beam bodies are provided in an integral manner, each of the end portion beam bodies is a strip plate, and a width of the end beam body is larger than a width of the main beam body; or, the main beam body and the end portion beam bodies are provided in a separate manner, each of the end portion beam bodies is mutually nested with and fixedly connected to a corresponding one of the two ends the end portion of the main beam body via a connecting sleeve, where the connecting sleeve and the end beam body are of a one-piece structure.

In an embodiment, an inner side of a portion, for connection with the cross beam, of each of the side sills protrudes inwards to form a first step portion, and a middle portion at an inner side of the main beam body protrudes with respect to the first step portion to form a second step portion.

In an embodiment, the side sill is provided with a cross beam connection hole, an inner cavity wall of the side sill is integrally provided with a first reinforcement portion in a protruding manner, and the first reinforcement portion is arranged around the cross beam connection hole; and/or, the side sill is provided with a mounting port for mounting a brake caliper mounting seat, the inner cavity wall of the side sill is integrally provided with a second reinforcement portion in a protruding manner, and the second reinforcement portion is configured to wrap the mounting port.

In an embodiment, the reinforcing rib extends along a length direction of the beam main body.

In an embodiment, the side sill is provided in a recessed manner to form a sunken segment, and the two cross beams are connected to two ends of the sunken segment respectively.

In an embodiment, at least a portion of at least one of the side sills, the cross beams and the auxiliary beam is made of a fiber composite material or a lightweight metal material.

A bogie is further provided in the present application, including the frame according to any one of above solutions.

In the present solution, the auxiliary beam of the bogie frame not only acts as a connector connecting two cross beams in the front and rear respectively, but also is divided inside to form the first cavity and the second cavity, which are in communication with the inner cavities of the cross beams, to serve as the additional air chambers for the air springs mounted at the bogie frame, which increases the volumes of the additional air chambers and simplifies the structure of the frame.

As a further technical solution, two stages of steps are provided at the inner side of the side sill in the present solution. The first step portion increases a thickness of the side sill at a corresponding position, to enhance the strength of the position for connection with the cross beams. The second step portion further protrudes inwards to provide sufficient support area to assist to support the air spring that is arranged eccentrically, while the eccentric arrangement of the air spring is beneficial to the stability of the bogie. In addition, the first step portion forms a transition step portion between the second step portion and the end beam body, which facilitates molding in processing, and reduces the molding difficulty in the integral molding process of the middle portion with abruptly changed cross-section.

As a further technical solution, the main beam body of the side sill, as a main bearing carrier, is designed to be of a hollow box-shaped structure. The space where the main beam body is located is relatively large, and the size of the box shape can be designed according to needs, such that the main beam body made of fiber composite materials has sufficient strength and stiffness. The end beam body is of a plate-like structure, to adapt to the height space limitation for the frame at this position. Furthermore, with the plate-like structure, the end beam body is resilient to some extent, and with stiffness design, the end beam body may act as a primary suspension together with a primary spring and a primary vertical damper, to provide vertical stiffness, or directly act as a primary suspension.

As a further technical solution, the reinforcing rib, which is integrally formed with the beam main body, may be provided at the interior of the cross beam, such that the strength and mechanical performance of the cross beam made of the fiber composite material are ensured. Moreover, at least one gap is provided at an end of the reinforcing rib. The reinforcing rib is of a long tube-shaped hollow beam structure with the interior being hollow and two ends being open, and the gap is formed at an edge of an opened end of the reinforcing rib. In this way, when the connector abuts against the end of the reinforcing rib, the connector will not block the end of the reinforcing rib, and a cavity of the reinforcing rib and the cavity of the beam main body can be in communication with each other via the gap, such that the cavity of the cross beam can be fully utilized to serve as the additional air chamber of the air spring. In this way, before the connector and the side sill are mounted and fastened, the connector abuts against the end of the reinforcing rib to function for pre-positioning, to ensure the connector to be located at a proper position. After being fastened with the side sill by a fastener, two ends of the connector abut against the reinforcing rib and the side sill respectively, and the position of the connector is pretty stable, which correspondingly ensures the reliability of the connection with the side sill.

### BRIEF DESCRIPTION OF THE DRAWINGS

FIG. 1 is a schematic view showing the structure of a bogie frame according to a first embodiment of the present application;
FIG. 2 is a schematic view showing the structure of an auxiliary beam 3 in FIG. 1;
FIG. 3 is a front view of FIG. 2;
FIG.4 is a right side view of FIG. 3;
FIG. 5 is a left side view of FIG. 4;
FIG. 6 is a top view of FIG. 3;
FIG. 7 is a sectional view taken along line A-A in FIG. 3;
FIG. 8 is a view taken along line B-B in FIG. 5;
FIG. 9 is a view taken along line C-C in FIG. 5;
FIG. 10 is a schematic view showing the structure of an cross beam and the auxiliary beam in FIG. 1;
FIG. 11 is a top view of FIG. 10;
FIG. 12 is a view seen from an end of FIG. 10;
FIG. 13 is a schematic view showing the structure of the cross beam in FIG. 10;
FIG. 14 is a schematic view showing a connection between a reinforcing rib and a connector in FIG. 10;
FIG. 15 is a schematic view of the cross beam at an end of the reinforcing rib;
FIG. 16 is a schematic view showing the structure of a side sill in FIG. 1;
FIG. 17 is a top view of FIG. 16;
FIG. 18 is a view of FIG. 16 from another perspective, showing a bottom of the side sill;
FIG. 19 is a vertical sectional view of FIG. 16;
FIG. 20 is a schematic view showing the structure of a bogie frame according to a second embodiment of the present application;
FIG. 21 is a schematic view showing the structure of a side sill of a bogie frame of according to a third embodiment of the present application;
FIG. 22 is a schematic view showing the structure of a bogie frame according to a fourth embodiment of the present application; and
FIG. 23 is a schematic view showing the structure of a side sill in FIG. 22.

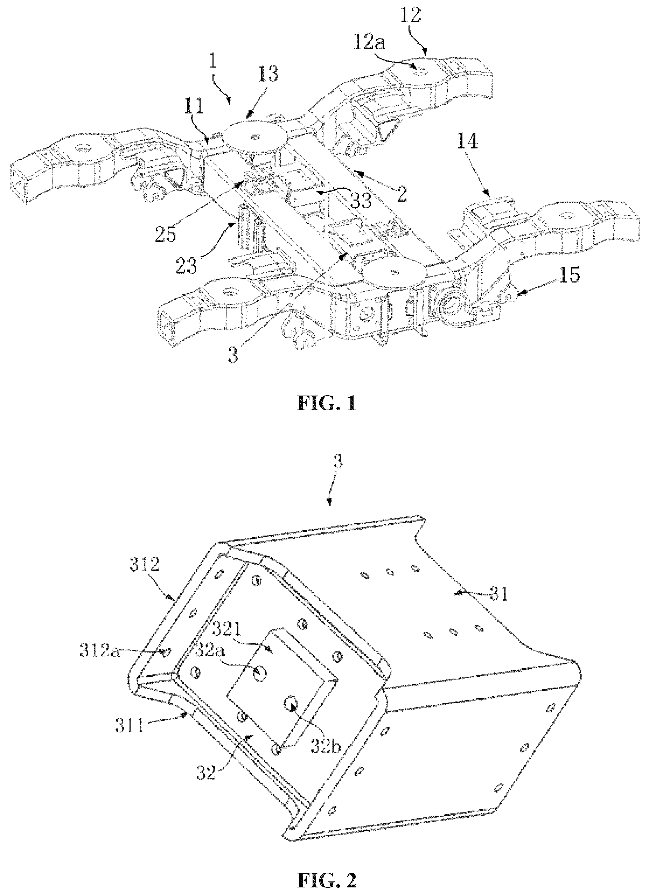

Reference numerals in FIGS. 1 to 23:

| | | | |
|---|---|---|---|
| 1 | side sill, | 11 | main beam body, |
| 111 | first step portion, | 112 | second step portion, |
| 113 | cross beam connection hole, | 114 | manual operation fabrication hole, |
| 115 | mounting port, | 116 | large filleted corner, |
| 117 | small filleted corner, | 118 | first reinforcement portion, |
| 119 | second reinforcement portion, | 1110 | ventilation port, |
| 12 | end beam body, | 12a | fabrication opening, |
| 121' | cylinder structure, | 121'a | mounting port, |
| 122' | rectangular tube structure, | 121 | round mounting plate, |
| 121a | arc-shaped extension edge, | 122 | strip-shaped mounting plate, |
| 122a | strip-shaped extension edge, | 13 | air spring mounting seat, |
| 14 | brake caliper mounting seat, | 15 | positioning rotary arm seat, |
| 2 | cross beam, | 21 | beam main body, |
| 211 | mounting hole, | 22 | reinforcing rib, |
| 221 | gap, | 23 | oil tank mounting seat, |
| 24 | connector, | 25 | lateral damper seat, |
| 3 | auxiliary beam, | 31 | housing, |
| 311 | U-shaped flange, | 312a | fastening hole, |
| 312 | extension flange, | 313 | partition, |
| 31a | mounting hole, | 31b | first differential pressure valve port, |
| 31c | second differential pressure valve port, | | |
| 31d | first window, | 31e | second window, |
| 3a | first cavity, | 3b | second cavity, |
| 32 | differential pressure valve mounting seat, | | |
| 321 | protrusion, | | |
| 32a | first differential pressure valve communication hole, | | |
| 32b | second differential pressure valve communication hole, | | |
| 32c | bolt, | 33 | lateral stopper seat, |
| 33a | insertion hole, | 341 | first sealing box, |
| 341a | opening, | 342 | second sealing box, |
| 343 | third sealing box, | 35 | seal joint, |
| 351 | washer, | 352 | nut, |
| 353 | sealing tube, | 361 | first lining, |
| 362 | second lining, | 37 | seal ring, |
| 381a | first connection plate, | 381b | first inner protrusion, |
| 381c | first outer protrusion, | 381d | first connection hole, |
| 382a | second connection plate, | 382b | second inner protrusion, |
| 382c | second outer protrusion, | 382d | second connection hole, |
| 383a | third connection plate, | 383b | third inner protrusion, |
| 383c | third outer protrusion, | 383d | third connection hole. |

### DETAILED DESCRIPTION OF THE EMBODIMENTS

For those skilled in the art to better understand technical solutions of the present application, the present application will be further described in detail in conjunction with drawings and embodiments hereinafter.

Please refer to FIG. 1, which is a schematic view showing the structure of a bogie frame according to a first embodiment of the present application.

The bogie frame includes two side sills 1 extending along a longitudinal direction, and two cross beams 2 arranged between the two side sills 1. An auxiliary beam 3 provided in the present solution is arranged between the two cross beams 2 of the bogie frame. Two sides of the auxiliary beam 3 is fixed to the two cross beams 2 respectively to connect the two cross beams 2, so as to enhance the connection reliability between the two cross beams 2 and improve the overall strength of the frame. The specific structure of the auxiliary beam 3 can be understood referring to the first and second embodiments hereinafter.

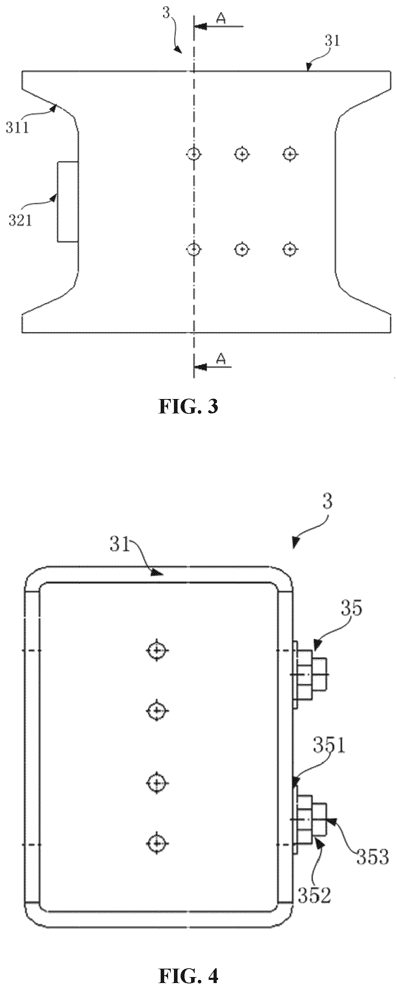

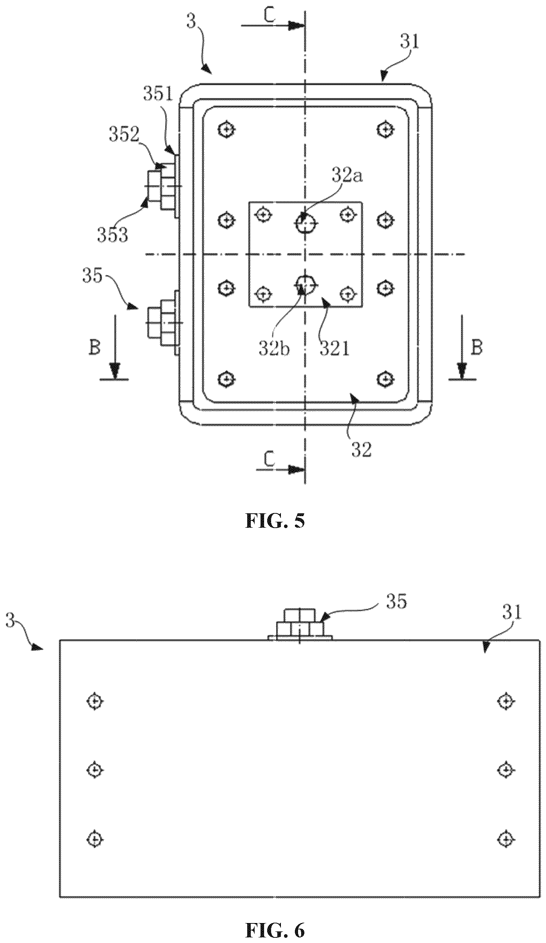

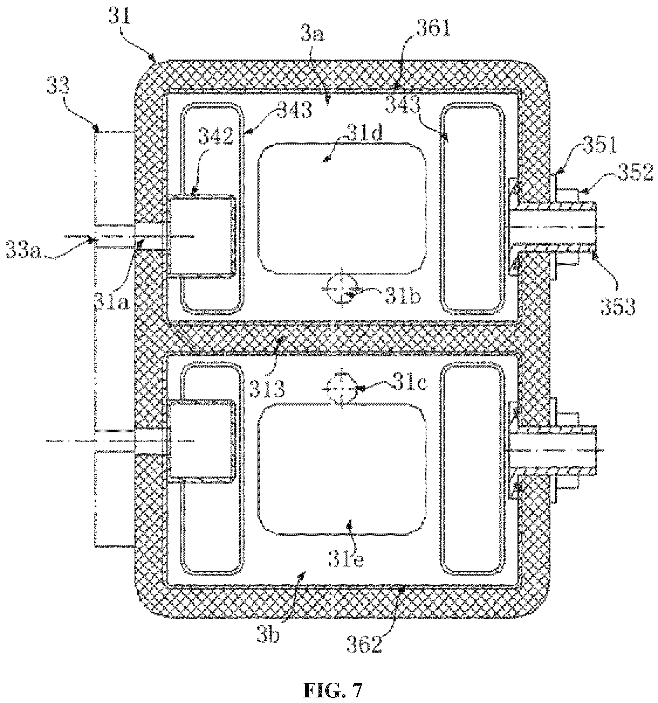

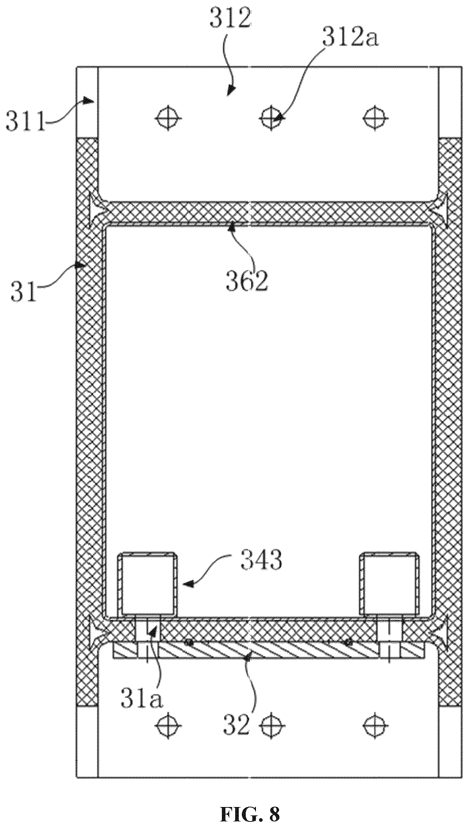

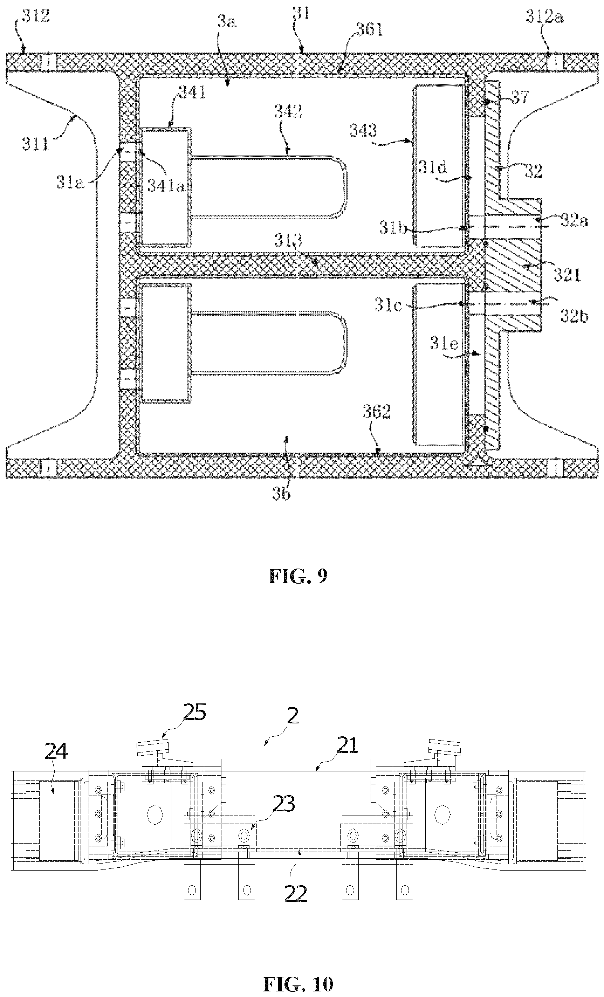

FIG. 2 is a schematic view showing the structure of the auxiliary beam 3 in FIG. 1; FIG. 3 is a front view of FIG. 2; FIG.4 is a right side view of FIG. 3; FIG. 5 is a left side view of FIG. 4; FIG. 6 is a top view of FIG. 3; FIG. 7 is a sectional view taken along line A-A in FIG. 3; FIG. 8 is a view taken along line B-B in FIG. 5; and FIG. 9 is a view taken along line C-C in FIG. 5.

As shown in FIGS. 2 and 7, the auxiliary beam 3 in this embodiment includes a housing 31 forming an enclosed inner cavity. A partition 313 is provided in the inner cavity of the housing 31, and the partition 313 divides the inner cavity into a first cavity 3a and a second cavity 3b. As shown in FIG. 2, the housing 31 in the first embodiment is substantially of a cuboid structure. The FIG. 3 shows a top of the housing 31. An upper side and a lower side of in FIG. 3 represent a front side and a rear side of the housing 31 respectively; where the front side and the rear side refer to front and rear along a longitudinal direction of the frame; in a direction perpendicular to the paper surface in FIG. 3, the top and a bottom of the housing 31 are located at an outer side and an inner side respectively; and left and right sides in FIG. 3 are left and right sides of the housing 31 respectively along a horizontal direction, which is in correspondence to a lateral direction of the frame. As shown in FIG. 1, the front side and the rear side of the housing 31 are connected to peripheral walls of the two cross beams 2 in the front and rear respectively. For example, an edge of an end portion of a front side plate of the housing 31 in FIG.1 is provided with a fastening hole 312a, and is fastened with the cross beam 2 by inserting a fastener. As shown in FIGS. 7 and 9, the first cavity 3a and the second cavity 3b, formed by the inner cavity of the housing 31 being divided by the partition 313, are distributed along the front and rear direction, where the first cavity 3a is close to one cross beam 2, and the second cavity 3b is close to the other cross beam 2.

In the present embodiment, two air chamber ports are provided at the bottom of the housing 31. With continued reference to FIG. 7, the housing 31 is provided with a first air chamber port and a second air chamber port, each being in communication with the interior and exterior of the housing. The first air chamber port is configured to communicate the first cavity 3a with the exterior, and the second air chamber port is configured to communicate the second cavity 3b with the exterior. Specifically, the first air chamber port and the second air chamber port may be in communication with the inner cavities of the two cross beams 2 respectively by pipelines. For example, the first air chamber port in correspondence to the first cavity 3a is communicated with the inner cavity of the cross beam 2 which is close to the first cavity, and the second air chamber port in correspondence to the second cavity 3b is communicated with the inner cavity of the other cross beam 2 which is close to the second cavity. The two air chamber ports in FIG. 7 are each communicated with the exterior by an external pipeline via a seal joint 35 mounted thereto. It may be appreciated that, the first air chamber port and the second air chamber port may directly abuts the cross beams 2 without external pipelines. By providing the external pipelines, the connections are easier to be implemented, and the sealing performance of the connections is easier to be ensured. In addition, the two air chamber ports are not limited to be arranged at the bottom of the housing 31, alternatively, they may be arranged at the top or other positions. Herein, the two air chamber ports are arranged at the bottom, which facilitates the connection with the cross beams 2 at the front and rear sides thereof, without interfering with other components. A top of the auxiliary beam 33 in FIG. 1 is provided with a lateral stopper seat 33.

It can be seen that, in the present embodiment, the auxiliary beam not only acts as a connector connecting the front and rear cross beams 2, but also is in communication with the inner cavities of the cross beams 2, thereby acting as the additional air chamber for the air spring mounted at the bogie frame, to increase the volume of the additional air chamber. A middle portion of the side sill 1 in FIG. 1 is provided with an air spring mounting seat 13 for mounting the air spring. In the present embodiment, one or more auxiliary beams 3 are provided between the two cross beams 2. Two auxiliary beams 3 are provided in FIG. 1 as an example, the first cavities 3a of the two auxiliary beams 3 and the inner cavity of one of the cross beams 2 together act as the additional air chamber for one air spring, and the second cavities 3b of the two auxiliary beams 3 and the inner cavity of the other cross beam 2 together act as the additional air chamber for the other air spring. The inner cavity of the auxiliary beam 3 may form an additional air chamber together with the inner cavity of the side sill 1, or form an additional air chamber together with the inner cavities of the cross beam 2 and the side sill 1, to satisfy the volume requirement of the additional air chamber, and further reduce the arrangement of attachments and simplify the structure of the frame.

The seal joint 35 is provided in order to satisfy the sealing requirement for the inner cavity of the housing 31 serving as the additional air chamber. As shown in FIG. 7, the seal joint 35 includes a sealing tube 353, a nut 352 and a washer 351. A tube portion of the sealing tube 353 runs through the first air chamber port or the second air chamber port. The sealing tube 353 is specifically of a "T" shape. One end of the tube portion located in the inner cavity of the housing 31 extends radially to form an annular flange, and the annular flange is fitted to an inner wall of the first cavity 3a or the second cavity 3b. The other end of the tube portion extending outside of the housing 31 is in threadedly fixed to the nut 352. The washer 351 is located between the nut 352 and an outer wall of the housing 31. The seal joint 35 and the housing 31 may be sealed by a sealant or a seal ring. Specifically, the sealing tube 353 is bonded to an inner wall of the air chamber port by a sealant, the annular flange and the inner wall of the first cavity 3a may be bonded by a sealant or may be provided with a seal ring therebetween, the washer 351 and the outer wall of the housing 31 may be provided with a seal ring or a sealant therebetween, and the washer 351 may directly be a sealing gasket. In this case, a tube cavity of the sealing tube 353 forms a passage, such that the corresponding first cavity 3a or second cavity 3b is communicated with the exterior, and the external pipeline can be inserted to the sealing tube 353.

Meanwhile, since the first cavity 3a and the second cavity 3b of the auxiliary beam 3 act as portions of the additional air chambers of two air springs respectively, the housing 31 is provided with a first differential pressure valve port 31b and a second differential pressure valve port 31c in communication with the first cavity 3a and the second cavity 3b respectively. As shown in FIGS. 2 and 3, a differential pressure valve mounting seat 32 is provided at a left side of the auxiliary beam 3, and the differential pressure valve mounting seat 32 is for mounting of the differential pressure valve. As shown in FIG. 9, the differential pressure valve mounting seat 32 is provided with a first differential pressure valve communication hole 32a and a second differential pressure valve communication hole 32b to be communicated with the first cavity 3a and the second cavity 3b by the first differential pressure valve port 31b and the second differential pressure valve port 31c provided at the housing 31 respectively. In this way, when the differential pressure valve is mounted, the first cavity 3a and the second cavity 3b are in communication with the differential pressure valve, such that the differential pressure valve can detect pressures of the first cavity 3a and the second cavity 3b, to obtain the pressure difference between the two air springs, so that the pressure can be regulated, to keep balance and stability of the system.

As shown in FIGS. 2 and 9, the differential pressure valve mounting seat 32 includes a base plate and a protrusion 321 located in the middle of the base plate. The base plate is fixed to the housing 31, and the first differential pressure valve communication hole 32a and the second differential pressure valve communication hole 32b are provided in the protrusion 321, to form relatively long passages.

In the present embodiment, the housing 31 is made of a fiber composite material, which may be carbon fiber, or may include carbon fiber and fiberglass. The present embodiment is illustrated by taking the carbon fiber as an example, which will not be described in detail. The housing 31 is of a one-piece structure. The partition 313 is part of the housing 31, and is integrally formed with the housing 31. The auxiliary beam 3 made of carbon fiber is beneficial to making the frame lightweight, and has more advantages in anti-corrosion. The auxiliary beam 3 made of a composite material can be fastened to the cross beams 2 by fasteners, which is easy to be dismounted.

In order to improve the sealing performance of the first cavity 3a and the second cavity 3b serving as air chambers, please further refer to FIG. 9, the inner wall of the first cavity 3a and the inner wall of the second cavity 3b are provided with linings, namely a first lining 361 and a second lining 362 respectively. The linings may serve as a core mold. When laying or braiding and winding the carbon fibers, the linings are integrally formed with the housing 31 made of carbon fiber, which further ensures the sealing of the inner cavity of the housing 31. The first lining 361 and the second lining 362 may be made of materials with a high corrosion resistance, such as stainless steel, titanium alloy, polyethylene, high molecular weight polyethylene or the like, to prevent the linings from being corroded.

In this case, for mounting external components of the auxiliary beam 3 made of carbon fiber, since the general welding connection means for metal beams is not suitable, a corresponding connection seat is specially provided in the present embodiment to realize mounting of the external components of the auxiliary beam 3 made of carbon fiber, while the sealing requirement is also taken into consideration.

Please further refer to FIG. 9, the connection seat includes a sealing box, and a portion of a peripheral wall of the sealing box is fixed to an inner wall of the lining in a sealed manner. A first sealing box 341, a second sealing box 342 and a third sealing box 343 are shown in FIG. 9. The sealing boxes are all rectangular boxes, where a side surface of the box is fitted to the inner wall of the lining of the first cavity 3a or the second cavity 3b. The sealing box and the lining are integrally formed by injection molding, welding or other means, which ensures the sealing performance at the position of fitting.

The housing 31 is provided with multiple mounting holes 31a communicating the interior and exterior thereof according to mounting needs of the external components. The sealing box, when being fitted to the inner wall of the lining at a corresponding position. covers at least one of the mounting holes 31a correspondingly at the same time, and an opening in communication with the mounting hole 31a is provided in the sealing box at a position where the mounting hole 31a is covered. As shown in FIG. 9, an opening 341a is provided at a side, fitted to the first lining 361, of the first sealing box 341. When an external component needs to be mounted, a mounting seat of the external component may be fastened or the external component may be directly fastened to the position of the mounting hole 31a by a fastener. For example, the fastener may be a bolt, and the bolt is inserted into the mounting hole 31a, passes through the hole 341a and is inserted into the corresponding sealing box. In this case, the sealing box not only provides a space for the fastener to perform fastening, but also ensures the sealing between the mounting hole 31a and the first cavity 3a or between the mounting hole 31a and the second cavity 3b. The sealing box may cover one mounting hole 31a or more mounting holes 31a. Multiple fasteners may be inserted into one sealing box when fastening corresponding external components, whereby the sealing performance is easier to be ensured. Certainly, each fastener and each mounting hole 31a may be in correspondence to one sealing box.

The first sealing box located at a left end and the corresponding mounting hole 31a, and the second sealing box 342 located at the top and the corresponding mounting hole 31a are shown in FIG. 9, which are configured for connection with the lateral stopper seat 33 in FIG. 1, for mounting a lateral stopper. As shown in FIG. 7, the lateral stopper mounting seat 33 is provided with an insertion hole 33a, and the fastener is inserted into the insertion hole 33a and gets into the second sealing box 342. Further referring to FIGS. 7 and 9, the differential pressure valve mounting seat 32 is also mounted by providing a sealing box. The first cavity 3a and the second cavity 3b of the housing 31 are each provided with two third sealing boxes 343, which are connected to an upper end and a lower end of the base plate of the differential pressure valve mounting seat 32. From the perspective in FIG. 7, two third sealing boxes 343 are arranged in a left-right direction in each of the first cavity 3a and the second cavity 3b. As shown in FIG. 7 and 9, a first window 31d and a second window 31e are provided at cavity walls, located at an end corresponding to the differential pressure valve mounting seat 32, of the first cavity 3a and the second cavity 3b of the housing 31, respectively. The base plate of the differential pressure valve mounting seat 32 almost covers the whole end of the auxiliary beam 3, and covers the first window 31d and the second window 31e. In order to ensure the sealing performance, a seal ring 37 may be provided between the base plate and the end of the differential pressure valve mounting seat 32. It may be appreciated that, there may be no windows provided on the housing 31, and the base plate of the differential pressure valve mounting seat 32 may be designed to be relatively small, as long as a space for providing the differential pressure valve communication holes is reserved.

Please refer to FIGS. 2 and 9 in conjunction for understanding, the housing 31 in the present embodiment is substantially cuboid. The top and the bottom of the housing 31 extend towards two ends to form U-shaped flanges 311. In correspondence, the front and rear sides of the housing extend towards the two ends to form strip-shaped extension flanges 312. The fastening hole 312a for connection with the cross beam 2 may be provided at the extension flange 312, to facilitate connection with the cross beam 2. An outer end of the extension flange 312 is flush with an outer end of the U-shaped flange 311, so that the extension flanges and the U-shaped flanges are combined to form a flange-type housing structure of the auxiliary beam 3. The U-shaped flange 311 structure is distributed at the left and right sides of the housing 31, wrapping the overall structure of the housing 31, to be connected to the cross beams 2 via the U-shaped flange 311 structure, so as to provide support for the overall structure of the flange and housing structure made of composite materials, and to realize mounting and dismounting of the auxiliary beam 3 made of composite materials. The auxiliary beam 3 made of composite materials may be assembled with the cross beams 2 made of a carbon fiber composite material to form an H-shaped integral cross beam structure, the whole of which is assembled with the side sills 1 of the bogie finally.

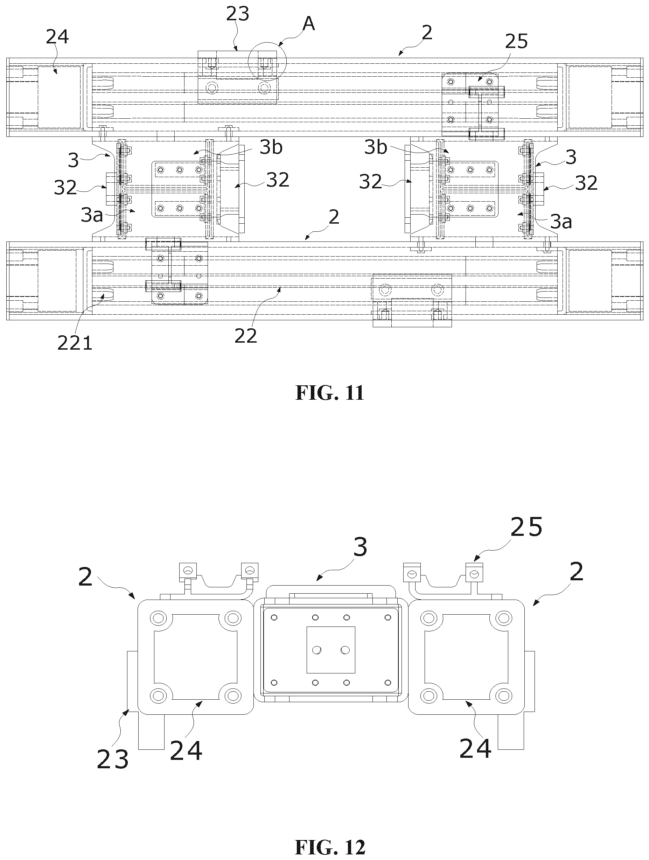

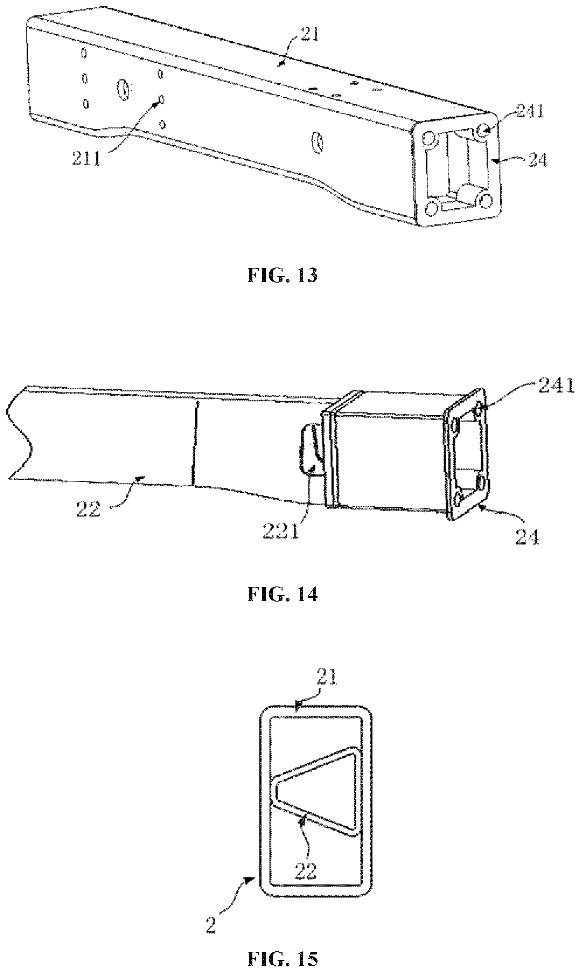

Please further refer to FIGS. 10 to 12, FIG. 10 is a schematic view showing the structure of the cross beam and the auxiliary beam in FIG. 1; FIG. 11 is a top view of FIG. 10; FIG. 12 is a view seen from an end of FIG. 10; and FIG. 13 is a schematic view showing the structure of the cross beam in FIG. 10.

As shown in FIGS. 12 and 13, the cross beam 2 is a rectangular beam. Certainly, it may be an O-shaped beam, i.e. a round beam, or a beam body with a section of other shapes. The cross beam 2 may has uniform sections or non-uniform sections, which is not limited in this solution.

In the present embodiment, the cross beam 2 includes a beam main body 21 made of a fiber composite material, and a reinforcing rib 22 also made of the fiber composite material and integrally formed inside an inner cavity of the beam main body 21. The reinforcing rib 22 extends along a length direction of the beam main body 21, and the reinforcing rib 22 is of a long tube-shaped hollow structure with two ends being open. Specifically in the embodiment, as shown in FIG. 10, a length of the reinforcing rib 22 is less than a length of the beam main body 21. The reinforcing rib 22 does not extend to ends of the cross beam 2, and there is a distance between two ends of the reinforcing rib 22 and the corresponding ends of the cross beam 2. In this way, a segment of inner cavity is reserved at each of the two ends of the cross beam 2, for arrangement of a connector 24, and the connector 24 is used to establish reliable connection with the side sills.

As shown in FIGS. 14 and 15, FIG. 14 is a schematic view showing connection between the reinforcing rib 22 and the connector 24 in FIG. 10; and FIG. 15 is a schematic view of the cross beam 2 at an end of the reinforcing rib 22.

Specifically, the connector 24 is embedded in the inner cavity at the end of the cross beam 2, and the connector 24 is provided with an insertion hole 241. A connection seat may be provided in the side sill 1, and the connection seat is also provided with an insertion hole. A fastener may be inserted into the insertion hole of the connection seat and the insertion hole 241 of the connector 24 at the same time, such that the connector 24 is locked tightly with the connection seat, thereby achieving the object of fastening the cross beam 2 with the side sill 1. The connector may be a metallic connection seat, which is easy to be fitted and fastened with the fastener. The connector 24 is embedded in the end of the cross beam 2, and may be fixed to the cross beam 2 by a rivet. When the connector 24 is fixed to the cross beam 2, an end of the connector 24 abuts against the end of the reinforcing rib 22, and the other end of the connector abuts against a periphery of the side sill 1. Meanwhile, the connector 24 is fastened to the side sill via the above fastener. In FIG. 5, the connector 24 is a metallic connection seat of a cylinder shape, which is embedded in the end of the cross beam 2 along the axial direction, and multiple insertion holes 241 are distributed at the annular end of the connector 24.

In this way, before the connector 24 is mounted and fastened to the side sill 1, the connector 24 abuts against the end of the reinforcing rib 22, to achieve the pre-positioning effect, which ensures the connector 24 to be located at a proper position. After being fastened to the side sill 1 by the fastener, two ends of the connector 24 abuts against the reinforcing rib 22 and the side sill 1 respectively, the position of the connector 24 is pretty stable, which correspondingly ensures the reliability of connection with the side sill 1. Furthermore, the connector 24 abuts against the reinforcing rib 22, which is beneficial to the force transmission and dispersion of the side sill and the cross beam 2, and thereby improving the overall force bearing performance.

On the premise of this, at least one gap 221 is provided at an end of the reinforcing rib 22. As shown in FIG. 14, the reinforcing rib 22 is of a long tube-shaped hollow beam structure with the interior being hollow and two ends being open, where the gap 221 is formed at an edge of an opened end of the reinforcing rib 22. In this way, when the connector 24 abuts against the end of the reinforcing rib 22, the connector 24 will not block the end of the reinforcing rib 22, and a cavity of the reinforcing rib 22 and the cavity of the beam main body 21 can be in communication with each other via the gap 221.

As shown in FIG. 15, the reinforcing rib 22 is of a hollow beam structure, and is located in the beam main body 21. The reinforcing rib 22 divides the inner cavity of the cross beam 2 into an inner cavity of the reinforcing rib 22 and a cavity between an outer wall of the reinforcing rib 22 and an inner wall of the beam main body 21. If the connector 24 blocks the end of the reinforcing rib 22, the inner cavity of the cross beam 2 and other portions of the inner cavity of the reinforcing rib 22 will be blocked from each other. In this solution, due to the presence of the gap 221, even if the connector 24 abuts against the end of the reinforcing rib 22, portions formed by dividing the inner cavity of the cross beam 2 are still in a mutually communicated state. The size, number and distributed position of the gap 221 may be set according to the size of the reinforcing rib 22 and actual ventilation situations, which is not limited in the present embodiment.

Since the inner cavities of the cross beams 2 are communicated with each other, which have a large volume, when they act as the additional air chamber of the air spring of the bogie, the volume of the additional air chamber can be increased. As described hereinabove, both the cavity of the cross beam 2 and the cavity of the auxiliary beam 3 can act as the additional air chamber. The beam main body 21 of the cross beam 2 can be processed with an air chamber port in communication with the cavity of the auxiliary beam 3. As mentioned in the present application, the inner cavity of the auxiliary beam 3 and the inner cavity of the cross beam 2 act as the additional air chamber, which includes a case that the inner cavity of the side sill 1 also acts as the additional air chamber at the same time, or a case that only the inner cavity of the auxiliary beam 3 and the inner cavity of the cross beam 2 act as the additional air chamber.

The cross beam 2 in the present embodiment is made of a fiber composite material. For easy connection with external components, the cross beam 2 in the present embodiment is provided with a connection seat specially for connection. For the structure of the connection seat, reference is made to the structure of the above connection seat in the auxiliary beam 3 for understanding.

In FIG. 11, the cross beam 2 is provided with a lateral damper seat 25 at the top thereof and an oil tank mounting seat 23 at an outer side thereof. The lateral damper seat 25 and the oil tank mounting seat 23 may each be provided with an insertion hole. A fastener can be inserted into the insertion hole and inserted into a connection hole of the corresponding connection seat. The connection hole may be a threaded hole, and the fastener may be a bolt. This type of structure of the connection seat enables the cross beam 2 made of the fiber composite material to be reliably connected with external components, and will not affect the sealing performance of the interior and exterior of the cross beam 2.

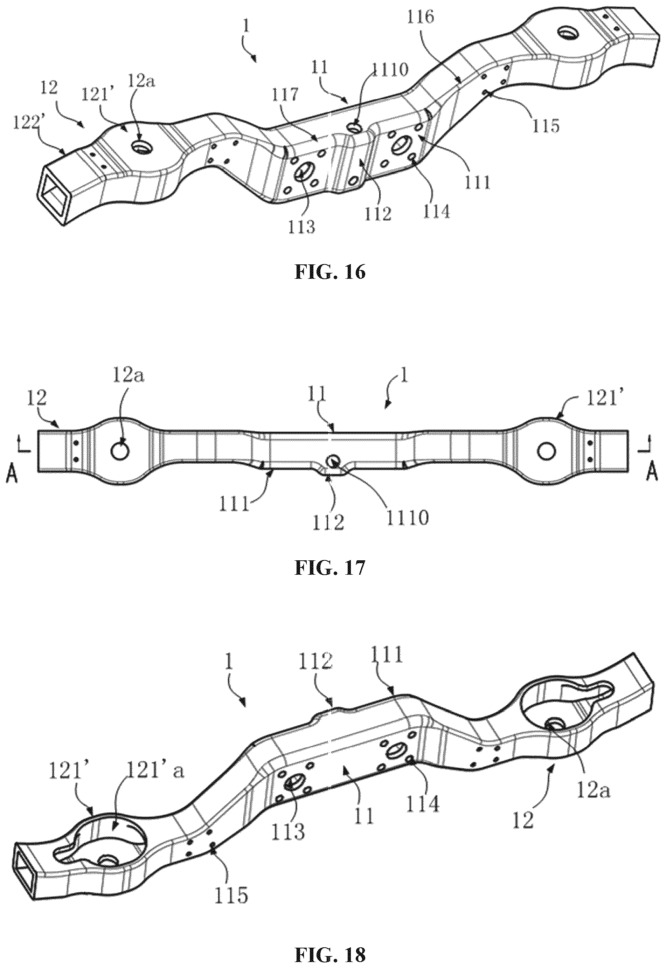

Please refer to FIGS. 16 to 19, FIG. 16 is a schematic view showing the structure of a side sill 1 in FIG. 1; FIG. 17 is a top view of FIG. 16; and FIG. 18 is a view of FIG. 16 from another perspective, showing a bottom of the side sill 1.

As shown in FIG. 16, the side sill 1 is of a one-piece box-shaped structure. To facilitate illustration, the side sill 1 is divided into a main beam body 11 and an end beam body 12. Specifically, the main beam body 11 is arranged in a sunken manner in this embodiment, which includes a sunken segment and inclined segments located at both ends of the sunken segment respectively. The end beam body 12 is connected to the inclined segment. As shown in FIG. 1, a brake caliper mounting seat 14 is provided at an inner side of the side sill 1, and a positioning rotary arm seat 15 is provided at the bottom of the side sill 1.

As shown in FIG. 2, the main beam body 11 of the side sill 1 is provided with cross beam connection holes 113. Specifically, the cross beam connection holes 113 are provided in both an inner side and an outer side of the side sill 1, where two cross beam connection holes 113 located at corresponding positions form a set of cross beam connection holes 113. The side sill 1 is provided with two sets of cross beam connection holes 113 for connection with the two cross beams 2. Manual operation fabrication holes 114 may be provided around each of the cross beam connection holes 113, to facilitate mounting and dismounting of the connector connecting the cross beam 2 and the side sill 1.

Please further refer to FIGS. 16 and 17, an inner side of a portion, for connection with the cross beam, of the main beam body 11 protrudes inwards to form a first step portion 111, and a middle portion at an inner side of the main beam body 11 protrudes with respect to the first step portion 111 to form a second step portion 112. Herein, two sides of the side sill 1 are defined as the inner side and the outer side respectively. Unless otherwise specified herein, "inner" and "outer" are based on the bogie frame, where "inner" refers to being close to the middle of the bogie frame, while "outer" refers to being away from the middle of the bogie frame. That is, sides of the two side sills 1 facing each other are the inner sides, and correspondingly, sides of the two side sills 1 facing away from each other are the outer sides.

It may be appreciated in conjunction with FIG. 17 that, a thickness of the main beam body 11 is substantially uniform along a length direction, where the length direction is the left-right direction in FIG. 17, the thickness is the size in the up-down direction in FIG. 17, and the thickness is the width of the main beam body 11. At the position of the main beam body 11, due to the existence of the first step portion 111 and the second step portion 112 that relatively protrude, the thickness of the main beam body 11 is increased. To prevent stress concentration, as shown in FIGS. 16 and 17, smooth transitions are provided between the first step portion 111 and an inner side of the adjacent inclined segment, and between the first step portion 111 and the second step portion 112. The first step portion 111 is in correspondence to a position where the cross beam 2 is connected. As shown in FIG. 16, the cross beam connection holes 113 are provided at a step surface of the first step portion 111. Moreover, a top of the second step portion 112 supports the air spring that is eccentrically arranged. As shown in FIG. 1, the air spring mounting seat 13 is eccentrically arranged close to the middle of the bogie. By eccentrically arranging the air spring, stress condition of the bogie can be improved, and the protruding second step portion 112 provides overall support to the eccentrically arranged air spring in conjunction with the cross beam 2.

In the present embodiment, two stages of steps are arranged at the inner side of the side sill 1. The first step portion 111 increases a thickness of the side sill 1 at a corresponding position, to enhance the strength at the position where the cross beams 2 are connected. The second step portion 112 further protrudes inwards to provide sufficient support area to assist to support the eccentrically arranged air spring. The first step portion 111 forms a transition step portion between the second step portion 112 and other surfaces of the inner side of the main beam body 11, which facilitates molding in processing, and reduces the molding difficulty in the integral molding process of the middle portion of the main beam body 11 with abruptly changed cross-section.

Please further refer to FIGS. 1, 16 and 17, a ventilation port 1110 is provided at a top of the middle portion of the main beam body 11, and the air spring mounting seat 13 is mounted to a top of the main beam body 11. After the air spring is mounted to the air spring mounting seat 13, the ventilation port 1110 communicates the air spring and the inner cavity of the main beam body 11. In this case, a portion or the whole of the inner cavity of the main beam body 11 may act as the air chamber of the air spring, and act as the additional air chamber together with the cross beam 2 and the auxiliary beam 3. The ventilation port 1110 provided herein is in correspondence to the eccentrically arranged air spring. The ventilation port 1110 is also arranged eccentrically with respect to longitudinal center lines of the main beam body 11, where the longitudinal center lines are in the same longitudinal plane.

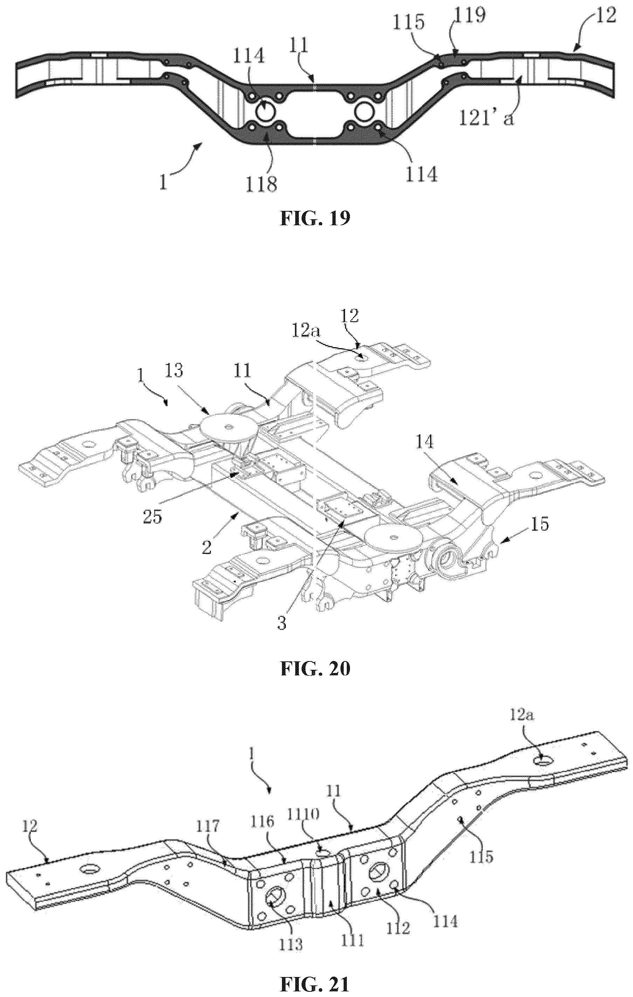

Please further refer to FIG. 19, FIG. 19 is a vertical sectional view of FIG. 16.

A first reinforcement portion 118, which protrudes and is made of carbon fiber, is provided at an inner cavity wall of the main beam body 11 corresponding to a position where the cross beam 2 is connected. Regarding the inner cavity wall in this application, the expression "inner cavity" refers to a hollow chamber in the side sill 1, which is used to be distinguished from external environment of the side sill 1, and is not in the same frame of reference as the "inner side" described hereinbefore. As shown in FIG. 19, two ends of the sunken segment of the main beam body 11 are provided with the cross beam connection holes 113. The stress of the cross beam 2 is complicated and the load is heavy. The first reinforcement portion 118 is arranged around the cross beam connection holes 113 to improve the strength at the positions where the cross beams 2 are connected. In addition, as shown in FIG. 19, the first reinforcement portion 118 wraps the manual operation fabrication hole 114.

Similarly, a second reinforcement portion 119, which protrudes and is made of carbon fiber, is provided at the inner cavity wall of the main beam body 11 corresponding to a position where the brake caliper mounting seat 14 is connected. As shown in FIG. 4, the end beam body 12 is provided with a mounting port 115 for mounting the brake caliper mounting seat 14, and the second reinforcement portion 19 wraps the mounting port 115. That is, the mounting port 115 is provided at the second reinforcement portion 119, such that the position of the mounting port 115 is reinforced, to be adapted to a large braking counter force of the brake caliper.

In the present embodiment, as described hereinabove, the main beam body 11 of the side sill 1 is of a reversed "π" shape with the middle portion of being sunken downwards. The end beam body 12 is configured to mounting a primary spring, and is required to be located at a certain a height, while the position of the main beam body 11 where the cross beam 2 is connected is low. By providing the inclined segment which is inclined by a certain angle, the height of the main beam body 11 is reduced, to prevent interference with the vehicle body and be connected to the cross beam 2. It can be seen that, the sunken arrangement fully utilizes the space. The fiber composite material has a high tensile strength, which is suitable for this structural design.

Please refer to FIG. 16, an upper edge and a lower edge of the inner side of the sunken segment of the main beam body 11 are each configured to be a large filleted corner 116, and an upper edge and a lower edge of the inner side of the inclined segment of the main beam body 11 are each configured to be a small filleted corner 117. A smooth transition is provided between the large filleted corner 116 and the small filleted corner 117. The large filleted corner 116 and the small filleted corner 117 are relative concepts, and are designed according to the structural size and assembling needs of the side sill 1. The large filleted corner 116 of the main beam body 11 is beneficial to molding of the carbon fibers in processing. The brake caliper mounting seat 14 is mounted to the inner side of the inclined segment for fixedly mounting the brake caliper. In this case, the large filleted corners 116 of the main beam body 11 are gradually transitioned toward both sides to small filleted corners 117, so as to satisfy the application requirement of the mounting port 115 of the brake caliper mounting seat 14.

In addition, in the present embodiment, the end beam body 12 includes a cylinder structure 121' and a rectangular tube structure 122' connected to each other. The rectangular tube structure 122' is located at an outer end of the cylinder structure 121'. The cylinder structure 121' is connected to the main beam body 11, and a bottom of the cylinder structure 121' is provided with an opening, to form a mounting port 121'a for the primary spring of a primary suspension. The primary suspension may include a primary spiral steel round spring and a primary vertical damper. A fabrication opening 12a as shown in FIG. 16 for dismounting the spiral steel round spring is provided at a top of the cylinder structure 121'. The primary vertical damper is connected to a lower portion, close to the cylinder structure 121', of the rectangular tube structure 122'.

The molding process of the side sill 1 in the above embodiment is described as follows.

First, a core mold is prepared, where the core mold may be made of metal as an example. The core mold is designed according to the shape of the side sill 1 which needs to be molded. For example, the core mold also includes an inner side and an outer side, where the inner side is formed with a first core mold step portion and a second core mold step portion corresponding to the first step portion 111 and the second step portion 112 respectively.

Then, carbon fiber prepreg is laid over the core mold, the laid carbon fiber prepreg forms an inner core, where a thickness of the inner core is less than the thickness of the side sill 1 to be molded.

Then, the inner core is cut along a length direction of the core mold, to take the core mold out, where the cutting manner is beneficial to the demolding of the core mold of a special-shaped structure.

The cut inner core includes two halves. At this time, the cut inner core is rejoined to form a complete inner core of a hollow beam shape, and the inner core is relatively thin. After that, dry carbon fibers are laid at an outer side of the rejoined inner core, during which process shaping glue may be used to reinforce the local bearing capacity. When laying the dry carbon fibers, in order to improve the continuity of dry carbon fibers, the three-dimensional braiding technology may be joined together to achieve a dry carbon fiber layer structure. After the overall thickness requirement of the side sill 1 is satisfied, laying of dry carbon fibers is stopped, and the same braiding and winding manners are applied in the molding process.

Finally, under pressure and/or vacuum, resin is injected to cure the dry carbon fibers, and two ends are flattened to form the end beam bodies 12 of a plate-like structure. The above ports and connection holes are then machined according to structural needs to form the side sill 1.

In resin injection and curing in the above molding process, the Resin Transfer Molding (RTM) process as well as an autoclave are applied for the overall molding of the side sill 1, and the side sill 1 made of carbon fiber material is finally molded. The machined ports and connection holes are formed by machining at positions of the cross beam connection hole 113, the fabrication opening 12a, the mounting port 115 and the manual operation fabrication hole 114 of the side sill 1. The mounting port 115 and the manual operation fabrication hole 114 may be processed at the positions of the first reinforcement portion 118 and the second reinforcement portion 119, and the mounting port 115 and the manual operation fabrication hole 114 formed thereby are wrapped by the first reinforcement portion 118 and the second reinforcement portion 119 respectively.

In order to form the above first reinforcement portion 118 and second reinforcement portion 119, recesses are provided on an outer surface of the core mold corresponding to a position where the cross beam 2 is connected, and a position where the brake caliper mounting seat 14 is connected. Before the carbon fiber prepreg is laid as above, a reinforcement layer or a reinforcement block may be laid in the recesses beforehand, to form the first reinforcement portion 118 and the second reinforcement portion 119.

In the above molding process, the inner core is prepared first, and then cut to take out the core mold, then the dry carbon fibers are laid and/or braided after the inner core is rejoined, and the special-shaped core mold can be taken out. The side sill 1 in the present embodiment has a complicated shape, which includes a plate-like structure, design of two stages of steps and gradually changed filleted corners. Braiding, laying and RTM molding methods are used in conjunction, which effectively solves the molding problem due to the complicated shape of the side sill 1.

### Second Embodiment

Please refer to FIG. 20, FIG. 20 is a schematic view showing the structure of a bogie frame according to a second embodiment of the present application.

The structure of the frame according to the second embodiment is basically the same as that of the first embodiment, the difference only lies in the structure of the end beam body 12 of the side sill 1, and the same parts will not be described herein.

As shown in FIG. 20, a side sill 1 in the second embodiment includes a main beam body 11 of a box shape, i.e. the main beam body 11 is of a hollow box-shaped structure. It differs from the first embodiment in that, the end beam body 12 in the second embodiment is of a plate-like structure. Specifically, the end beam body 12 in FIG. 20 is of a strip plate structure.

The plate-like end beam body 12, which is located at the end of the side sill 1, is connected to the primary spring, and the primary spring is located under the end beam body 12. By such arrangement, the main beam body 11 of the side sill 1, serving as a main bearing carrier, is designed to be of a hollow box-shaped structure. The space where the main beam body 11 is located is relatively large, and the size of the box shape can be designed according to needs, such that the main beam body 11 made of fiber composite material has sufficient strength and stiffness. The end beam body 12 is of a plate-like structure, to be adapted to the height space limitation of the frame at this position; besides, with the plate-like structure, the end beam body 12 is resilient to some extent, and can act as a primary suspension together with the primary spring and the primary vertical damper by stiffness design to provide vertical stiffness, or directly functions as the primary suspension with the primary spring and the primary vertical damper being omitted. A top of the end beam body 12 may be provided with a fabrication opening 12a for dismounting the primary spring.

As shown in FIG. 20, the end beam body 12 of the side sill 1 is of a strip plate, and a width of the end beam body 12 is larger than a width of the main beam body 11, where the width is a size in the up-down direction in FIG. 20. The main beam body 11 is smoothly transitioned to the end beam body 12. The end beam body 12 with a relatively large width can provide a sufficient area for the connection with the primary spring. The primary spring is connected to a lower portion of one end of the end beam body 12 close to the main beam body 11, and the primary vertical damper is connected to a lower portion of the other end of the end beam body 12 away from the main beam body 12.

According to space requirements, as shown in FIG. 20, an end portion of the end beam body 12 is bent downwards by a certain angle, to form the end beam body of a duckbilled shape, to prevent interference with the vehicle body.

The molding process of the side sill 1 in the second embodiment is basically the same as that in the first embodiment, while since the end beam body 12 is of a plate-like structure, an end portion of the side sill 1 needs to be flattened after the basic structure of the side sill 1 is formed. In addition, the side sill 1 in the second embodiment may employ the molding process as follows.

First, a core mold is prepared, where the core mold may be made of metal as an example. The core mold includes a main core mold and an end core mold. The main core mold is designed according to the shape of the main beam body 11 of the side sill 1 which needs to be molded. For example, the main core mold also includes an inner side and an outer side, where the inner side is formed with a first core mold step portion and a second core mold step portion corresponding to the first step portion 111 and the second step portion 112 respectively.

Then, the main core mold and the end core mold are joined into a complete core mold, and carbon fibers are winded on the core mold.

Then, under pressure and/or vacuum, resin is injected to cure the carbon fibers.

Finally, the end core mold is removed, and the main core mold is retained. Two ends are flattened to form the end beam bodies 12 of a plate-like structure. The above ports and connection holes are then machined according to structural needs to form the required side sill 1. At this time, the main beam body 11 of the side sill 1 includes a main core mold matching the main beam body, and a carbon fiber composite material layer winded on the main core mold.

### Third Embodiment

Please refer to FIG. 21, FIG. 21 is a schematic view showing the structure of a side sill 1 of a bogie frame according to a third embodiment of the present application.

The third embodiment is basically the same as the second embodiment, with the only difference lying in that, the end beam body 12 is a flat and straight strip plate, which is not processed to be bent. When the end beam body 12 is designed to be relatively short, the interference with the vehicle body can be prevented without bending the end beam body 12. The molding process may be understood referring to the second embodiment.

### Fourth Embodiment

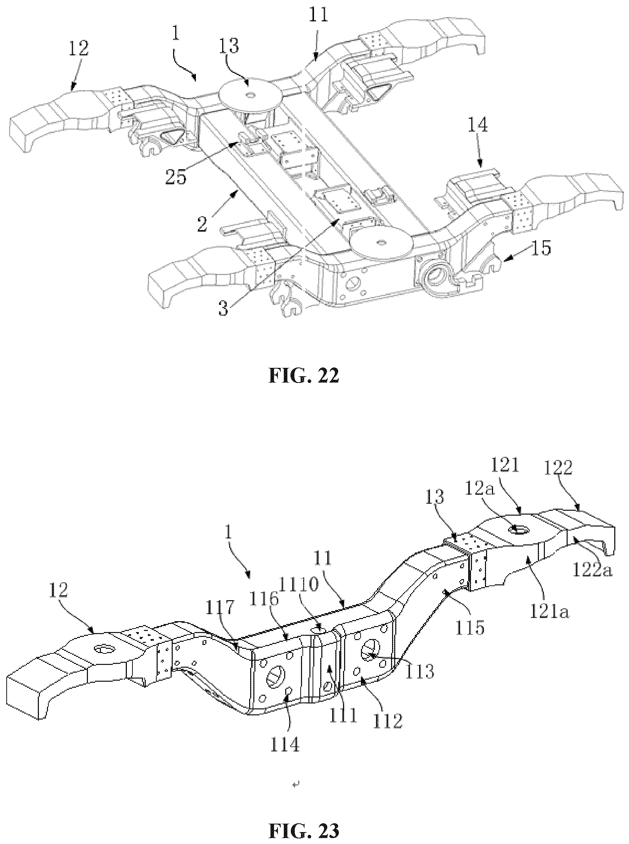

Please refer to FIGS. 22 and 23, FIG. 22 is a schematic view showing the structure of a bogie frame according to a fourth embodiment of the present application; and FIG. 23 is a schematic view showing a side sill 1 in FIG. 22.

The structure of frame according to the fourth embodiment is basically the same as those in the second and third embodiments, where the differences lie in the structure of the end beam body 12, and in that the end beam body 12 and the main beam body 11 are provided in a separate manner. The same parts will not be described, and the differences are mainly described hereinafter.

As shown in FIG. 23, the main beam body 11 and the end beam body 12 in the fourth embodiment are provided in a separate manner. The main beam body 11 is made of a fiber composite material, while the end beam body 12 is made of metal. The end beam body 12 is still of the plate-like structure, and plays the same role as the plate-like end beam body 12 in the second and third embodiments.

In FIG. 23, the end beam body 12 is integrally formed with a connecting sleeve 13 made of metal, and the end beam body 12 and an end of the main beam body 11 are nested with and fixedly connected to each other via the connecting sleeve 13. Specifically, the connecting sleeve 13 is sleeved on the end of the main beam body 11, and is connected by a fastener. The fastener may be a rivet or a bolt. The main beam body 11 is of a box-shaped structure, and the end beam body 12 is of a plate-like structure. The end beam body 12 and the main beam body 11 are provided in a separate manner, which reduces the molding difficulty of the overall side sill 1. In addition, the end beam body 12 is made of metal, which facilitates the stiffness design according to actual needs, and facilitates the mounting with the primary spring and the primary vertical damper.

Specifically, as shown in FIG. 23, the end beam body 12 includes a round mounting plate 121 and a strip-shaped extension plate 122. A lower portion of the round mounting plate 121 is connected with the primary spring, such as a spiral steel spring. The round mounting plate 121 matches an end of the primary spring in shape. The fabrication opening 12a is provided at the round mounting plate 121. In order to provide sufficient area for mounting, the width of the end beam body 12 is also larger than the width of the main beam body 11. In FIG. 23, sizes in a width direction of the round mounting plate 121 and the strip-shaped extension plate 122 are both larger than the width of the main beam body 11. The width of the strip-shaped extension plate 122 is less than the width of the round mounting plate 121, and a lower portion of the strip-shaped extension plate 122 is connected with the primary vertical damper.

In addition, two sides of the round mounting plate 121 each extends downwards to form an arc-shaped extension edge 121a, and two sides of the strip-shaped extension plate 122 each extends downwards to form a strip-shaped extension edge 122a. The arc-shaped extension edge 121a and the strip-shaped extension edge 122a are integrally formed, i.e. a section of the end beam body 12 is approximately U-shaped, which is beneficial to improving the bending resistance. In FIG. 23, a length of the end beam body 12 is relatively large, and the end of the extension plate 122 is bent downwards. In this way, when the bogie is rotated with respect to the vehicle body, interference between the long end beam body 122 and the vehicle body can be avoided.

The molding process of the side sill 1 in the fourth embodiment is basically the same as that in the first embodiment, and does not require flattening operation. In the final molding, the prepared main beam body 11 is connected with the end beam bodies 12 made of metal to form the side sill 1. In the first to the third embodiments, the main beam body 11 and the end beam body 12 are of a one-piece structure, which has a better structural stability. In the fourth embodiment, the main beam body 11 and the end beam body 12 are of a separate structure, the manufacturing process of which is easier.

In all the above embodiments, apart from fiber composite materials that are mainly used, the frame may be also made of titanium alloys and other lightweight metal materials, which can also reduce the weight.

## Claims

1. A frame, comprising two side sills (1) and two cross beams (2) connected between the two side sills (1), air springs of a bogie being mounted at the side sills (1); wherein
at least one auxiliary beam (3) is connected between the two cross beams (2), **characterised in that**
an inner cavity of the auxiliary beam (3) is divided into a first cavity (3a) and a second cavity (3b);
the first cavity (3a) is in communication with an inner cavity of one of the two cross beams (2), to together serve as an additional air chamber for one of the air springs; and
the second cavity (3b) is in communication with an inner cavity of the other of the two cross beams (2), to together serve as another additional air chamber for another one of the air springs; wherein
the at least one auxiliary beam (3) is provided with a first differential pressure valve port (31b) and a second differential pressure valve port (31c) each being in communication with an interior and an exterior of the at least one auxiliary beam (3), and the first differential pressure valve port (31b) and the second differential pressure valve port (31c) are in communication with the first cavity (3a) and the second cavity (3b) respectively; wherein the first cavity (3a) and the second cavity (3b) are in communication with a differential pressure valve through the first differential pressure valve port (31b) and the second differential pressure valve port (31c), respectively; and wherein
an inner wall of the first cavity (3a) and an inner wall of the second cavity (3b) are each provided with a lining serving as a core mold;
a connection seat is further provided, wherein the connection seat comprises a sealing box, and a portion of a peripheral wall of the sealing box is fixed to an inner wall of the lining in a sealed manner; and
each of the two cross beams (2) comprises a beam main body (21) made of a fiber composite material, and a reinforcing rib (22) also made of the fiber composite material and integrally formed inside an inner cavity of the beam main body (21), and the at least one auxiliary beam (3) made of a composite material is connected to the two cross beams (2) by fasteners.

2. The frame according to claim 1, wherein the side sills (1) are each of a one-piece box-shaped structure, and the side sills (1) are made of a fiber composite material or a lightweight metal material.

3. The frame according to claim 1, wherein each of the side sills (1) comprises a main beam body (11) of a box shape and end portion beam bodies (12) located at two ends of the main beam body (11) respectively, the end portion beam bodies (12) and the main beam body (11) are provided in an integral or separate manner, and the end portion beam bodies (12) are each of a plate-like structure.

4. The frame according to claim 3, wherein
the main beam body (11) and the end portion beam bodies (12) are provided in an integral manner, and the main beam body (11) and the end portion beam bodies (12) are all made of the fiber composite material; or,
the main beam body (11) and the end portion beam bodies (12) are provided in an integral manner, the end portion beam bodies (12) are made of the fiber composite material, and the main beam body (11) comprises a core mold matching the main beam body (11), and a fiber composite material layer wound around an outer periphery of the core mold; or
the main beam body (11) and the end beam body (12) are provided in a separate manner, the main beam body (11) is made of the fiber composite material, and the end beam body (12) is made of metal.

5. The frame according to claim 4, wherein
the main beam body (11) and the end portion beam bodies (12) are provided in an integral manner, each of the end portion beam bodies (12) is a strip plate, and a width of the end beam body (12) is larger than a width of the main beam body (11); or
the main beam body (11) and the end portion beam bodies (12) are provided in a separate manner, each of the end portion beam bodies (12) is mutually nested with and fixedly connected to a corresponding one of the two ends of the main beam body (11) via a connecting sleeve (13), wherein the connecting sleeve (13) and the end beam body (12) are of a one-piece structure.

6. The frame according to claim 3, wherein an inner side of a portion, for connection with the cross beam (2), of each of the side sills (1) protrudes inwards to form a first step portion (111); and a middle portion at an inner side of the main beam body (11) protrudes with respect to the first step portion (111) to form a second step portion (112).

7. The frame according to claim 6, wherein
the side sill (1) is provided with a cross beam connection hole (113), an inner cavity wall of the side sill (1) is integrally provided with a first reinforcement portion (118) in a protruding manner, and the first reinforcement portion (118) is arranged around the cross beam connection hole (113); and/or,
the side sill (1) is provided with a mounting port (115) for mounting a brake caliper mounting seat (14), the inner cavity wall of the side sill (1) is integrally provided with a second reinforcement portion (119) in a protruding manner, and the second reinforcement portion (119) is configured to wrap the mounting port (115).

8. The frame according to claim 1, wherein the reinforcing rib (22) extends along a length direction of the beam main body (21).

9. The frame according to any one of claims 1 to 8, wherein each of the side sills (1) is provided in a recessed manner to form a sunken segment, and the two cross beams (2) are connected to two ends of the sunken segment respectively.

10. The frame according to any one of claims 1 to 8, wherein at least a portion of at least one of the side sills (1), the cross beams (2) and the auxiliary beam (3) is made of a fiber composite material or a lightweight metal material.

11. A bogie, comprising the frame according to any one of claims 1 to 10.

12. A rail vehicle, comprising the bogie according to claim 11.

## Patentansprüche

1. Rahmen mit zwei Außenlangträgern (1) und zwei Querträgern (2), die zwischen den beiden Außenlangträgern (1) verbunden sind, wobei Luftfedern eines Drehgestells an den Außenlangträgern (1) montiert sind, wobei
wenigstens ein Zusatzträger (3) zwischen den beiden Querträgern (2) verbunden ist, **dadurch gekennzeichnet, dass** ein Innenhohlraum des Zusatzträgers (3) in einen ersten Hohlraum (3a) und einen zweiten Hohlraum (3b) geteilt ist,
der erste Hohlraum (3a) mit einem Innenhohlraum eines der beiden Querträger (2) in Verbindung steht, um gemeinsam als zusätzliche Luftkammer für eine der Luftfedern zu dienen, und
der zweite Hohlraum (3b) mit einem Innenhohlraum des anderen der beiden Querträger (2) in Verbindung steht, um gemeinsam als weitere zusätzliche Luftkammer für eine weitere der Luftfedern zu dienen, wobei
der wenigstens eine Zusatzträger (3) mit einem ersten Differenzdruckventilanschluss (31b) und einem zweiten Differenzdruckventilanschluss (31c) versehen ist, die jeweils mit einem Inneren und einem Äußeren des wenigstens einen Zusatzträgers (3) in Verbindung stehen, und der erste Differenzdruckventilanschluss (31b) und der zweite Differenzdruckventilanschluss (31c) mit dem ersten Hohlraum (3a) bzw. dem zweiten Hohlraum (3b) in Verbindung stehen, wobei der erste Hohlraum (3a) und der zweite Hohlraum (3b) über den ersten Differenzdruckventilanschluss (31b) bzw. den zweiten Differenzdruckventilanschluss (31c) mit einem Differenzdruckventil in Verbindung stehen, und wobei
eine Innenwand des ersten Hohlraums (3a) und eine Innenwand des zweiten Hohlraums (3b) jeweils mit einer Auskleidung versehen sind, die als Kernform dient,
ferner ein Verbindungssitz vorgesehen ist, wobei der Verbindungssitz einen Kabelvergusskasten umfasst und ein Abschnitt einer Umfangswand des Kabelvergusskastens abgedichtet an einer Innenwand der Auskleidung befestigt ist, und
jeder der beiden Querträger (2) einen Trägerhauptkörper (21) aus einem Faserverbundwerkstoff und eine Verstärkungsrippe (22) umfasst, die ebenfalls aus dem Faserverbundwerkstoff besteht und einstückig in einem Innenhohlraum des Trägerhauptkörpers (21) gebildet ist, und der wenigstens eine Zusatzträger (3), der aus einem Verbundwerkstoff besteht, mittels Befestigungselementen mit den beiden Querträgern (2) verbunden ist.

2. Rahmen nach Anspruch 1, bei dem die Außenlangträger (1) jeweils einen einteiligen, kastenförmigen Aufbau aufweisen und die Außenlangträger (1) aus einem Faserverbundwerkstoff oder einem Leichtmetallwerkstoff bestehen.

3. Rahmen nach Anspruch 1, bei dem jeder der Außenlangträger (1) einen kastenförmigen Hauptträgerkörper (11) und Endabschnittsträgerkörper (12) umfasst, die jeweils an zwei Enden des Hauptträgerkörpers (11) gelegen sind, wobei die Endabschnittsträgerkörper (12) und der Hauptträgerkörper (11) einstückig oder getrennt vorgesehen sind und die Endabschnittsträgerkörper (12) jeweils eine plattenartige Struktur aufweisen.

4. Rahmen nach Anspruch 3, bei dem
der Hauptträgerkörper (11) und die Endabschnittsträgerkörper (12) einstückig vorgesehen sind und der Hauptträgerkörper (11) und die Endabschnittsträgerkörper (12) alle aus dem Faserverbundwerkstoff bestehen, oder
der Hauptträgerkörper (11) und die Endabschnittsträgerkörper (12) einstückig vorgesehen sind, die Endabschnittsträgerkörper (12) aus dem Faserverbundwerkstoff bestehen und der Hauptträgerkörper (11) eine zu dem Hauptträgerkörper (11) passende Kernform und eine um einen Außenumfang der Kernform gewickelte Faserverbundwerkstoffschicht umfasst, oder
der Hauptträgerkörper (11) und der Endträgerkörper (12) getrennt vorgesehen sind, der Hauptträgerkörper (11) aus dem Faserverbundwerkstoff besteht und der Endträgerkörper (12) aus Metall besteht.

5. Rahmen nach Anspruch 4, bei dem
der Hauptträgerkörper (11) und die Endabschnittsträgerkörper (12) einstückig vorgesehen sind, jeder der Endabschnittsträgerkörper (12) eine Streifenplatte ist und eine Breite des Endträgerkörpers (12) größer als eine Breite des Hauptträgerkörpers (11) ist, oder
der Hauptträgerkörper (11) und die Endabschnittsträgerkörper (12) getrennt vorgesehen sind, die Endabschnittsträgerkörper (12) jeweils ineinander gesetzt und über eine Verbindungshülse (13) fest mit einem entsprechenden der beiden Enden des Hauptträgerkörpers (11) verbunden sind, wobei die Verbindungshülse (13) und der Endträgerkörper (12) eine einteilige Struktur aufweisen.

6. Rahmen nach Anspruch 3, bei dem eine Innenseite eines zur Verbindung mit dem Querträger (2) dienenden Abschnitts jedes der Außenlangträger (1) zur Bildung eines ersten Stufenabschnitts (111) nach innen vorsteht und ein mittlerer Abschnitt an einer Innenseite des Hauptträgerkörpers (11) zur Bildung eines zweiten Stufenabschnitts (112) in Bezug auf den ersten Stufenabschnitt (111) vorsteht.

7. Rahmen nach Anspruch 6, bei dem
der Außenlangträger (1) mit einer Querträgerverbindungsbohrung (113) versehen ist, eine Innenhohlraumwand des Außenlangträgers (1) in vorstehender Weise einstückig mit einem ersten Verstärkungsabschnitt (118) versehen ist und der erste Verstärkungsabschnitt (118) um die Querträgerverbindungsbohrung (113) herum angeordnet ist, und/oder
der Außenlangträger (1) mit einer Montageöffnung (115) zur Montage eines Bremssattelmontagesitzes (14) versehen ist, die Innenhohlraumwand des Außenlangträgers (1) in vorstehender Weise einstückig mit einem zweiten Verstärkungsabschnitt (119) versehen ist und der zweite Verstärkungsabschnitt (119) so ausgebildet ist, dass er die Montageöffnung (115) umhüllt.

8. Rahmen nach Anspruch 1, bei dem sich die Verstärkungsrippe (22) längs einer Längsrichtung des Trägerhauptkörpers (21) erstreckt.

9. Rahmen nach einem der Ansprüche 1 bis 8, bei dem jeder der Außenlangträger (1) zur Bildung eines eingesenkten Segments vertieft vorgesehen ist und die beiden Querträger (2) jeweils mit zwei Enden des eingesenkten Segments verbunden sind.

10. Rahmen nach einem der Ansprüche 1 bis 8, bei dem wenigstens ein Abschnitt der Außenlangträger (1) und/oder der Querträger (2) und/oder des Zusatzträgers (3) aus einem Faserverbundwerkstoff oder einem Leichtmetallwerkstoff besteht.

11. Drehgestell mit dem Rahmen nach einem der Ansprüche 1 bis 10.

12. Schienenfahrzeug mit dem Drehgestell nach Anspruch 11.

## Revendications

1. Châssis comprenant deux longerons latéraux (1) et deux barres transversales (2) reliées entre les deux longerons latéraux (1), des coussins d'air d'un bogie étant montés sur les longerons latéraux (1),
au moins une barre auxiliaire (3) étant reliée entre les deux barres transversales (2), **caractérisé en ce que**
une cavité interne de la barre auxiliaire (3) est divisée en une première cavité (3a) et une deuxième cavité (3b),
la première cavité (3a) est en communication avec une cavité interne de l'une des deux barres transversales (2), afin de servir ensemble de chambre à air supplémentaire pour l'un des coussins d'air, et
la deuxième cavité (3b) est en communication avec une cavité interne de l'autre des deux barres transversales (2), afin de servir ensemble d'une autre chambre à air supplémentaire pour un autre des coussins d'air,
ladite au moins une barre auxiliaire (3) étant pourvue d'un premier orifice (31b) de soupape de réglage de pression différentielle et d'un deuxième orifice (31c) de soupape de réglage de pression différentielle, chacun en communication avec un intérieur et un extérieur de ladite au moins une barre auxiliaire (3), et le premier orifice (31b) de soupape de réglage de pression différentielle et le deuxième orifice (31c) de soupape de réglage de pression différentielle étant en communication avec la première cavité (3a) et la deuxième cavité (3b), respectivement, la première cavité (3a) et la deuxième cavité (3b) communiquant avec une soupape de réglage de pression différentielle par l'intermédiaire du premier orifice (31b) de soupape de réglage de pression différentielle et du deuxième orifice (31c) de soupape de réglage de pression différentielle, respectivement, et
une paroi interne de la première cavité (3a) et une paroi interne de la deuxième cavité (3b) étant chacune pourvues d'un revêtement servant de moule de noyau,
un siège de raccordement étant en outre prévu, le siège de raccordement comprenant un boîte d'étanchéité, et une partie d'une paroi périphérique de la boîte d'étanchéité étant fixée de manière étanche à une paroi interne du revêtement, et
chacune des deux barres transversales (2) comprenant un corps principal de barre (21) en matériau composite renforcé par des fibres, et une nervure de renfort (22) également en matériau composite renforcé par des fibres et réalisée d'un seul tenant à l'intérieur d'une cavité interne du corps principal de barre (21), et ladite au moins une barre auxiliaire (3) en matériau composite étant reliée aux deux barres transversales (2) par des éléments de fixation.

2. Châssis selon la revendication 1, les longerons latéraux (1) étant chacun constitués d'une structure monobloc en forme de boîte, et les longerons latéraux (1) étant réalisés en un matériau composite renforcé par des fibres ou en un matériau métallique léger.

3. Châssis selon la revendication 1, chacun des longerons latéraux (1) comprenant un corps de barre principal (11) en forme de boîte et des corps de barre de partie d'extrémité (12) respectivement situés à deux extrémités du corps de barre principal (11), les corps de barre de partie d'extrémité (12) et le corps de barre principal (11) étant prévus de manière monobloc ou séparée, et les corps de barre de partie d'extrémité (12) étant chacun constitués d'une structure en forme de plaque.

4. Châssis selon la revendication 3,
le corps de barre principal (11) et les corps de barre de partie d'extrémité (12) étant prévus de manière monobloc, et le corps de barre principal (11) et les corps de barre de partie d'extrémité (12) étant tous réalisés en le matériau composite renforcé par des fibres, ou
le corps de barre principal (11) et les corps de barre de partie d'extrémité (12) étant prévus de manière monobloc, les corps de barre de partie d'extrémité (12) étant réalisés en le matériau composite renforcé par des fibres, et le corps de barre principal (11) comprenant un moule de noyau correspondant au corps de barre principal (11) et une couche de matériau composite renforcé par des fibres enroulée autour de la périphérie extérieure du moule de noyau, ou
le corps de barre principal (11) et le corps de barre d'extrémité (12) étant réalisés de manière séparée, le corps de barre principal (11) étant réalisé en le matériau composite renforcé par des fibres, et le corps de barre d'extrémité (12) étant réalisé en métal.

5. Châssis selon la revendication 4,
le corps de barre principal (11) et les corps de barre de partie d'extrémité (12) étant prévus de manière monobloc, chacun des corps de barre de partie d'extrémité (12) étant une plaque en bande, et une largeur du corps de barre d'extrémité (12) étant supérieure à une largeur du corps de barre principal (11), ou
le corps de barre principal (11) et les corps de barre de partie d'extrémité (12) étant réalisés de manière séparée, chacun des corps de barre de partie d'extrémité (12) étant mutuellement emboîté et relié de manière solidaire à une extrémité correspondante par les deux extrémités du corps de barre principal (11) par l'intermédiaire d'un manchon de raccordement (13), le manchon de raccordement (13) et le corps de barre d'extrémité (12) étant constitués d'une structure monobloc.

6. Châssis selon la revendication 3, une face intérieure d'une partie destinée au raccordement à la barre transversale (2), de chacun des longerons latéraux (1) faisant saillie vers l'intérieur de manière à former une première partie en gradin (111), et une partie médiane sur une face intérieure du corps de barre principal (11) faisant saillie par rapport à la première partie en gradin (111) de manière à former une deuxième partie en gradin (112).

7. Châssis selon la revendication 6,
le longeron latéral (1) étant pourvu d'un trou de raccordement (113) de barre transversale, une paroi de cavité interne du longeron latéral (1) étant pourvue d'un seul tenant d'une première partie de renfort (118) en saillie, et la première partie de renfort (118) étant agencée autour du trou de raccordement (113) de barre transversale, et/ou
le longeron latéral (1) étant pourvu d'un orifice de montage (115) pour le montage d'un siège de montage (14) d'étrier de frein, la paroi de cavité interne du longeron latéral (1) étant pourvue d'un seul tenant d'une deuxième partie de renfort (119) en saillie, et la deuxième partie de renfort (119) étant réalisée de manière à envelopper l'orifice de montage (115).

8. Châssis selon la revendication 1, la nervure de renfort (22) s'étendant selon un sens de la longueur du corps principal de barre (21).

9. Châssis selon l'une des revendications 1 à 8, chacun des longerons latéraux (1) étant réalisé en retrait de manière à former un segment en creux, et les deux barres transversales (2) étant respectivement reliées à deux extrémités du segment en creux.

10. Châssis selon l'une des revendications 1 à 8, au moins une partie des longerons latéraux (1) et/ou des barres transversales (2) et/ou de la barre auxiliaire (3) étant réalisée en un matériau composite renforcé par des fibres ou en un matériau métallique léger.

11. Bogie comprenant le châssis selon l'une des revendications 1 à 10.

12. Véhicule ferroviaire comprenant le bogie selon la revendication 11.
